# EUROPEAN PATENT APPLICATION

(11) **EP 4 783 441 A1**
(43) Date of publication of application: **29.07.2026**
(21) Application number: 25225945.2
(22) Date of filing: 19.12.2025
(51) Int. Cl.: H02M 1/32, H02M 3/156

(54) **BOOST CONVERTER OUTPUT PROTECTION SYSTEMS AND METHODS**

(30) Priority: 06.01.2025 US 202519011046
(71) Applicant: Analog Devices, Inc., Wilmington, MA 01887 (US)
(72) Inventor: ZHANG, Bin, Wilmington, 01887 (US); CHEN, Hua, Wilmington, 01887 (US); CHEN, Qiwei, Wilmington, 01887 (US); HUANG, Yuanqing, Wilmington, 01887 (US)
(74) Representative: Horler, Philip John

(57) **Abstract**

A power disconnect switch may include a first terminal configured to couple to a boost converter output and a second terminal configured to couple to a load. A comparator may include a first input terminal configured to couple to a source input, a second input terminal configured to couple to the boost converter output, and a first output terminal configured to output a signal indicating a condition of the boost converter output being less than or equal to the source input. A control circuit may include an input terminal coupled to the first output terminal of the comparator and a second output terminal coupled to the power disconnect switch. The control circuit may be configured to open the power disconnect switch in response to receiving the signal indicating the condition.

## Description

### BACKGROUND

In a DC-DC boost converter, the output voltage is higher than the input voltage. There are many different designs for boost converters, but essentially, an input voltage (VIN) is applied to an inductor, and an output of the inductor is coupled to a circuit configured to control current through the inductor and thereby charge an output (e.g., charge a capacitor) to produce an output voltage (VOUT) greater than VIN. Boosted VOUT can be supplied to a load. When VOUT > VIN, most boost converters are inherently able to control the current through the inductor very well, with high stability and accuracy. However, in cases where VOUT < VIN, such as when there is an overload condition or short circuit in the load, there is a low impedance path from VIN to VOUT, and the boost converter cannot limit or control the current along the low impedance path.

### BRIEF DESCRIPTIONS OF THE DRAWINGS

FIG. 1 shows an example circuit diagram of a boost converter with output protection according to some embodiments of the disclosure.
FIG. 2 shows an example circuit diagram of a boost converter with output protection circuit configured to retry operation after a fault condition according to some embodiments of the disclosure.
FIG. 3 shows an example timing diagram for the boost converter with output protection circuit of FIG. 2 according to some embodiments of the disclosure.
FIG. 4 shows an example circuit diagram of a boost converter with output protection circuit configured to latch off after a fault condition according to some embodiments of the disclosure.
FIG. 5 shows an example timing diagram for the boost converter with output protection circuit of FIG. 4 according to some embodiments of the disclosure.
FIG. 6 shows an example circuit diagram of a boost converter with output protection circuit including current sensing circuitry according to some embodiments of the disclosure.

### DETAILED DESCRIPTION OF SEVERAL EMBODIMENTS

Systems and methods described herein can provide highly accurate, low cost, and high-power capable current control to boost converters, thereby addressing the issue of current control during overload, short circuit, and/or other conditions causing output voltage (VOUT) < input voltage (VIN). Contrasted with other possible approaches for controlling current in boost converters, some of the disclosed systems and methods do not require a high current threshold to start protection, activate quickly, handle high power, reduce stress on internal and/or external components, can be implemented externally to the boost converter to provide converter-design agnostic solutions, allow the boost converter to provide normal current on startup, and can be implemented using low cost and low complexity components and circuits.

As noted above, when VOUT > VIN, most boost converters are inherently able to control the current through the inductor very well. Recognizing this feature of boost converters, some of the systems and methods described herein can be configured to intervene and provide current control and/or protection only at times when VOUT < VIN. For example, as described in detail below, protection circuitry can be included between a boost converter output and a load, regardless of boost converter design and/or internal configuration. Details and embodiments of the protection circuitry are described in detail below, but in general, at least some embodiments described herein can use a comparator to compare signal levels of VIN and VOUT from the boost converter. When the comparator detects a condition wherein VOUT < VIN, its output can cause a power switch interposed between VOUT and the load to open rapidly. The boost converter can continue to operate, and the protection circuitry can be configured so that when the fault in the load causing the detected VOUT < VIN condition clears, the boost converter can return to supplying VOUT to the load.

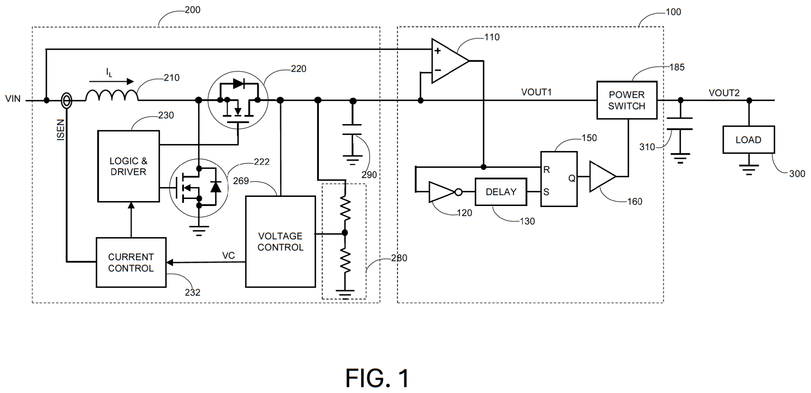

FIG. 1 shows an example circuit diagram of a boost converter 200 with output protection circuit 100 according to some embodiments of the disclosure. This figure provides a general example of an output protection circuit 100 coupled to boost converter 200. In some embodiments, output protection circuit 100 may include the features shown in FIG. 1. Additional embodiments that may include specific components and/or features meriting further explanation are shown in the figures that follow FIG. 1.

Example boost converter 200 of FIG. 1 is depicted with features that skilled artisans will recognize as typical of commercially available boost converter devices. For example, boost converter 200 can include inductor 210, switches 220, 222 (e.g., which may be FET or MOSFET or diode devices or other types of switches), logic and driver 230, current control 232, voltage control 269, voltage divider 280, and/or capacitor 290. These components may be arranged so that boost converter 200 may include an input configured to couple to a source input (VIN), boost circuitry configured to generate an output power with a higher voltage than a voltage of the source input (e.g., at least inductor 210 and switches 220, 222, as described in detail below), an output configured to deliver the output power (e.g., to load 300), at least one capacitor (e.g., capacitor 290) coupled between the boost output and ground, and a feedback and control circuit (e.g., at least logic and driver 230, current control 232, voltage control 269, and voltage divider 280) configured to sense an output voltage of the output power and regulate the output voltage to a predefined level;

When coupled to a voltage source VIN and a load (e.g., load 300, where boost converter 200 may be coupled to load 300 through output protection circuit 100), boost converter 200 may operate to provide an output voltage to load 300 that is greater than the voltage of VIN. For example, logic and driver 230 can open switch 220 and close switch 222, which may energize inductor 210. Logic and driver 230 may close switch 220 and open switch 222, delivering the energy from VIN and inductor 210, at the voltage greater than VIN, to capacitor 290, and/or load 300. Logic and driver 230 can control timing of switch 220, 222 openings and closings to maintain a desired VOUT1 > VIN. For example, current control 232 may monitor current through inductor 210. Voltage control 269 may monitor output voltage and voltage divider 280 voltage. Logic and driver 230 can operate switches 220, 222 using a pulse-width modulated signal from current control 232 to boost VOUT1 in response to changing current and/or voltage readings from current control 232 and/or voltage control 269, thereby providing a desired output to load 300.

While boost converter 200 is shown and described with the above common elements, it will become apparent that output protection circuit 100 can work with a variety of different boost converter 200 designs, including those having structural differences from boost converter 200 shown in FIG. 1.

It can be appreciated that the path from VIN to VOUT1 has a low impedance when VOUT1<VIN. Output protection circuit 100 may be inserted between boost converter 200 and load 300 to militate against negative effects resulting from this inherent property of boost converter 200 that may arise under some circumstances. Output protection circuit 100 may include comparator 110, inverter 120, delay 130, set-reset latch 150, buffer 160 (collectively "the protection control network"), and/or power switch 185. One terminal of power switch 185 may be arranged to receive the output power of boost converter 200 by being coupled to boost converter 200 output VOUT1. The other terminal of power switch 185 may be coupled to load 300. In at least some embodiments, capacitor 310 may also be coupled to the other terminal of power switch 185 and load 300. The protection control network may be coupled to boost converter 200 output VOUT1 and input VIN. For example, comparator 110 may include a first input terminal configured to couple to the source input VIN and a second input terminal coupled to boost converter 200 output VOUT1. Comparator 110 may output a condition signal indicating a condition of the output voltage being less than or equal to the voltage of the source input through an output terminal, and the remaining elements of the protection control network may use comparator 110 output signal to turn power switch 185 on and off.

In certain examples, fault conditions such as load 300 over current and/or load 300 short circuit can result in a potentially dangerous current overshoot being fed to load 300. Output protection circuit 100 may be configured to protect load 300 and boost converter 200 from current overshoot. For example, when VOUT1 decreases below VIN due to fault conditions on load 300 (e.g., over current or short circuit), the protection control network may immediately open power switch 185 to disconnect boost converter 200 output VOUT1 from load 300. Thus, the protection control network may be a control circuit including an input terminal coupled to the first output terminal of comparator 110 and an output terminal coupled to power disconnect switch 185 and being configured to open power disconnect switch 185 in response to receiving the condition signal from comparator 110. While power switch 185 is open, boost converter 200 output VOUT1 may recover to its regulation voltage even if load 300 fault conditions still exist.

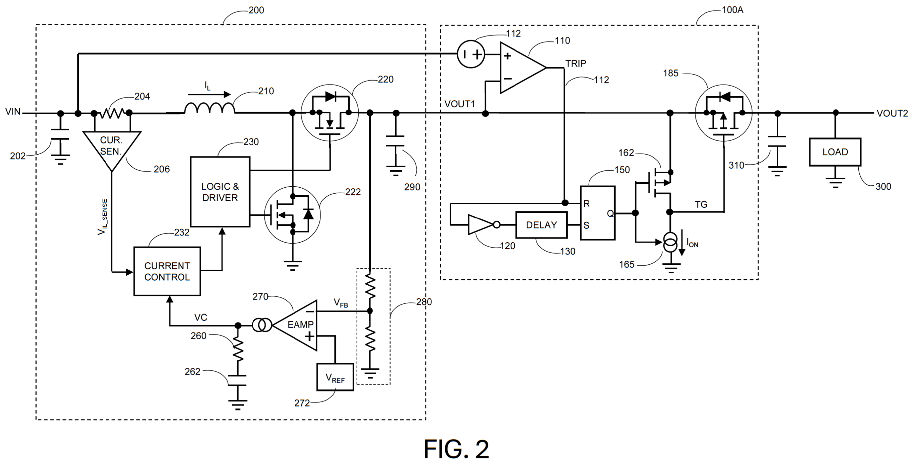

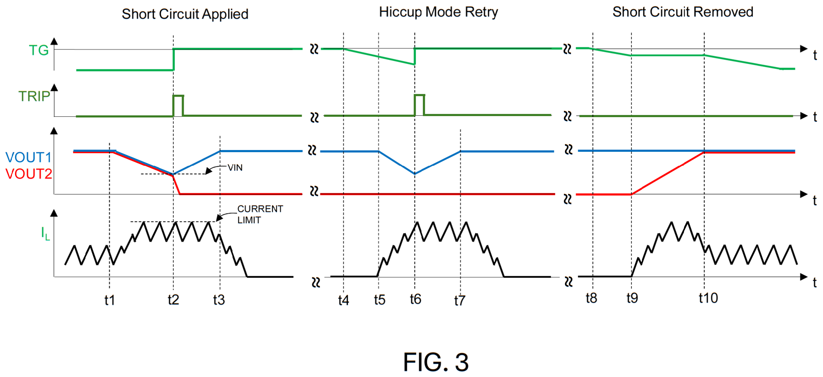

FIG. 2 shows an example circuit diagram of boost converter 200 with output protection circuit 100A configured to retry operation after a fault condition, and FIG. 3 shows an example timing diagram for the boost converter 200 with output protection circuit 100A of FIG. 2, according to some embodiments of the disclosure. In some embodiments, such as that shown by FIGS. 2 and 3, when boost converter 200 output VOUT1 increases above VIN, and after a predetermined delay time introduced by delay 130 (e.g., 50ms delay, although other delay times may be chosen based on system requirements, thermal cooling requirements, and/or other design considerations), the protection control network may close power switch 185. In this case, if load 300 fault conditions still exist, the power switch 185 disconnect operation may naturally repeat in the same manner as described above.

Boost converter 200 of FIG. 2 is configured similarly to boost converter 200 of FIG. 1 in at least some respects, but the illustration shows additional details. For example, capacitor 202 at the input to boost converter 200 where it couples to VIN is shown. Also, specific details of voltage control circuity are shown, such as amplifier 270 arranged to compare voltage of voltage divider 280 with reference voltage 272 and thereby generate current control signal VC, which may be stabilized by a compensation network comprising resistor 260 and capacitor 262 before being provided to current control 232. FIG. 2 also shows circuitry that may be used by current control 232 to sense the current through inductor 210, for example resistor 204 and current sensor 206, which may allow current control 232 to perform valley control to reduce a switching frequency in response to an inductor 210 current of the boost converter 200 exceeding a predefined threshold in some embodiments. These specific details of boost converter 202 are provided for further clarity, but it will be appreciated from the following description that output protection circuit 100A can function with a variety of different boost converters 200 configured according to any known or proprietary design.

Output protection circuit 100A of FIG. 2 may differ from output protection circuit 100 of FIG. 1 in that voltage offset 112 is added to VIN prior to input to comparator 110. While not shown in FIG. 2, some embodiments may add a voltage offset to VOUT1 prior to input to comparator 110 instead of, or in addition to, voltage offset 112 added to VIN. Furthermore, to aid in explaining the operation of output protection circuit 100A with respect to the timing diagram of FIG. 3, the protection control network is shown in greater detail, with FET 162 and current source 165 coupled between set-reset latch 150 and power switch 185. As described below, in some examples power switch 185 may turn on at a lower slew rate than turning off (e.g., due to current source 165).

FIG. 3 shows output protection circuit 100A in action with reference to TG (signal turning power switch 185 on or off), TRIP (output of comparator 110), VOUT1 (output of boost converter 200 as received by output protection circuit 100A), VOUT2 (output of output protection circuit 100A as received by load 300), and I_{L} (current through inductor 210). The diagram begins in a state of normal operation, transitioning through a short circuit appearing in load 300, a "hiccup mode" operation of output protection circuit 100A wherein VOUT1 is automatically disconnected from load 300 and reconnection is automatically tried, and finally removal of the short circuit in load 300 and return to normal operation.

Prior to time t1, boost converter 200 may be providing a boosted output to load 300 through closed power switch 185. Accordingly, VOUT1 = VOUT2 and both are high, TG is low (indicating power switch 185 is closed), TRIP is low (indicating comparator 110 detects VOUT1 > (VIN + voltage offset 112)), and I_{L} is below a current limit.

At t1, a short circuit may occur in load 300. As a result, VOUT2 (and therefore VOUT1) may start to decrease. At t2, VOUT1 may have decreased to VIN. This may cause comparator 110 to detect VOUT1 < (VIN + voltage offset 112), and TRIP may go high. The protection control network may quickly pull TG high, opening power switch 185. VOUT2 may quickly drop to 0V, and VOUT1 may start to recover due to the load 300 short circuit being disconnected by power switch 185. I_{L} may reach, but not exceed, the current limit.

At t3, VOUT1 may be back to regulated voltage, and I_{L} may be falling. Power switch 185 may remain open, keeping VOUT2 at 0V. Power switch 185 may remain open for the duration of a delay timer provided by delay 130.

At t4, the delay timer may expire, causing a hiccup retry to begin. TG may be slowly pulled down by current source 165, for example providing a lower slew rate for turn on than turn off. At t5, TG may reach a turn-on threshold value, causing power switch 185 to start to turn on and supply current to VOUT2. At the same time, boost inductor 210 current may increase, thereby supplying more current to VOUT1. In FIG. 3, the short circuit condition in load 300 has not been cleared by t6. Accordingly, at t6, VOUT1 may decrease to VIN due to the short circuit condition. This may cause comparator 110 to detect VOUT1 < (VIN + voltage offset 112), and TRIP may go high. TG may be pulled high quickly, and power switch 185 may turn off. VOUT1 may start to recover due to the short circuit being disconnected from boost converter 200 by power switch 185.

At t7, VOUT1 may be back to regulated voltage, and I_{L} may be falling. Power switch 185 may remain open, keeping VOUT2 at 0V. Power switch 185 may remain open for the duration of a delay timer provided by delay 130.

To summarize, operation of output protection circuit 100A as shown in FIG. 3 may be as follows. A first input terminal of comparator 110 may receive a source input signal (VIN), and a second input terminal of comparator 110 may receive an output signal (VOUT1) from boost converter 200, where boost converter 200 may be configured to generate the VOUT1 from VIN such that during normal operation, VOUT1 > VIN. Comparator 110 output terminal may output a signal indicating the voltage of the output signal (VOUT1) is less than or equal to the voltage of the source input signal (VIN). A control circuit (e.g., some or all elements of protection control network) including an input terminal coupled to the output terminal of comparator 110 and an output terminal coupled to power switch 185 may open power switch 185 in response to receiving the signal indicating the condition. Opening power switch 185 may decouple load 300 from the output signal (VOUT1), thereby preventing current overshoot due to a fault in load 300. The configuration of output protection circuit 100A may cause it to naturally re-close power switch 185 after a delay. If the fault in load 300 has been cleared, power switch 185 may remain closed, and normal operation may continue. If the fault has not been cleared, power switch 185 may reopen, and the cycle may repeat.

In FIG. 3, the short circuit in load 300 is removed at some time after power switch 185 is turned off following t6. At t8, the delay timer may expire, causing a hiccup retry to begin. TG may be slowly pulled down by current source 165, for example providing a lower slew rate for turn on than turn off. At t9, TG may reach a turn-on threshold value, causing power switch 185 to start to turn on and supply current to VOUT2. At the same time, boost inductor 210 current may increase, thereby supplying more current to VOUT1. Because the short circuit condition has been removed, VOUT2 may be pulled up. At t10, VOUT2 may be back to regulated voltage. Boost converter 200 and output protection circuit 100A may continue normal operation.

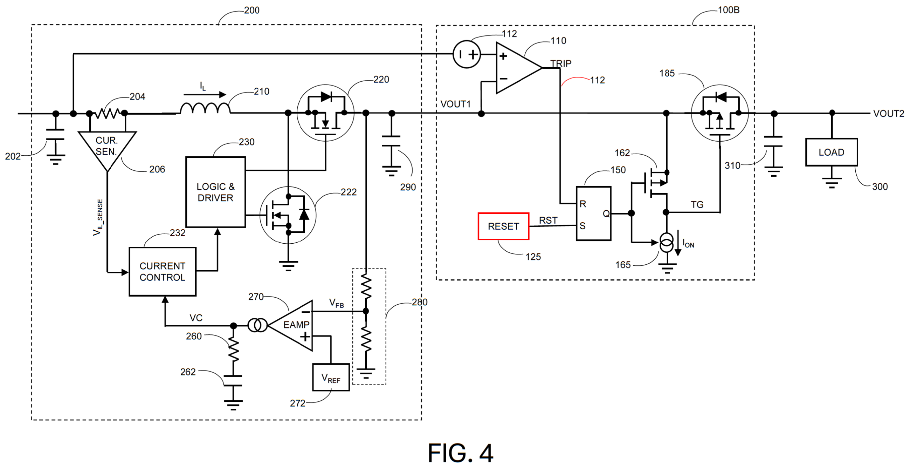

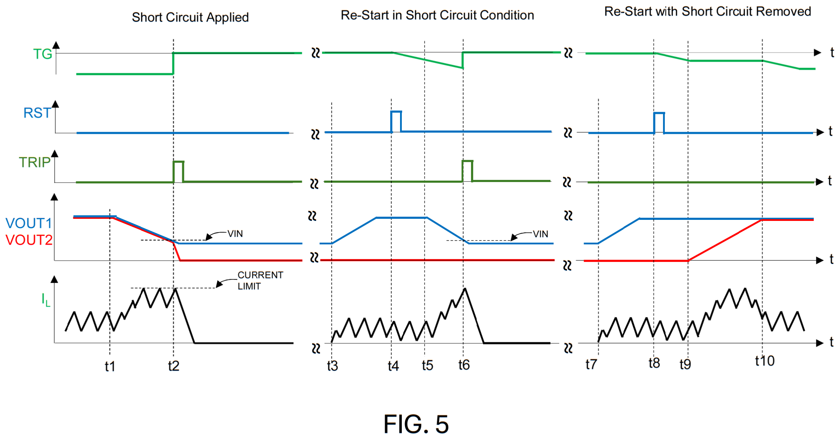

FIG. 4 shows an example circuit diagram of boost converter 200 with output protection circuit 100B configured to latch off after a fault condition, and FIG. 5 shows an example timing diagram for the boost converter 200 with output protection circuit 100B of FIG. 4, according to some embodiments of the disclosure. In some embodiments, such as that shown by FIGS. 4 and 5, when boost converter 200 output VOUT1 increases above VIN, power switch 185 may be latched off until a reset. In this case, the power switch 185 disconnect operation will not naturally repeat as in FIGS. 2 and 3. Instead, the power switch 185 may remain disconnected to allow correction of the problem with load 300 before resetting and retrying, for example.

Boost converter 200 of FIG. 4 is configured similarly to boost converter 200 of FIG. 2. However, this is for example only, and it will be appreciated that output protection circuit 100B can function with a variety of different boost converters 200 configured according to any known or proprietary design.

Output protection circuit 100B of FIG. 4 may differ from output protection circuit 100A of FIG. 2 in that inverter 120 and delay 130 may be replaced by reset 125. The timing diagram of FIG. 5 adds the output of reset 125 (RST) to the signals of FIG. 3 (TG, TRIP, VOUT1, VOUT2, and I_{L}).

Prior to time t1, boost converter 200 may be providing a boosted output to load 300 through closed power switch 185. Accordingly, VOUT1 = VOUT2 and both are high, TG is low (indicating power switch 185 is closed), TRIP is low (indicating comparator 110 detects VOUT1 > (VIN + voltage offset 112)), RST is low (as no load 300 fault has yet occurred), and I_{L} is below a current limit.

At t1, a short circuit may occur in load 300. As a result, VOUT2 (and therefore VOUT1) may start to decrease. At t2, VOUT1 may have decreased to VIN. This may cause comparator 110 to detect VOUT1 < (VIN + voltage offset 112), and TRIP may go high. The protection control network may quickly pull TG high, opening power switch 185. VOUT2 may quickly drop to 0V, and VOUT1 may start to recover due to the load 300 short circuit being disconnected by power switch 185. I_{L} may reach, but not exceed, the current limit.

At t3, VOUT1 may be back to regulated voltage, and I_{L} may be falling. Power switch 185 may remain open indefinitely until reset 125 sends RST signal, keeping VOUT2 at 0V.

At t4, reset 125 may send RST signal before the short circuit is cleared, and TG may be slowly pulled down by current source 165, for example providing a lower slew rate for turn on than turn off. At t5, TG may reach a turn-on threshold value, causing power switch 185 to start to turn on and supply current to VOUT2. At the same time, boost inductor 210 current may increase, thereby supplying more current to VOUT1. In FIG. 5, the short circuit condition in load 300 has not been cleared by t6. Accordingly, at t6, VOUT1 may decrease to VIN due to the short circuit condition. This may cause comparator 110 to detect VOUT1 < (VIN + voltage offset 112), and TRIP may go high. TG may be pulled high quickly, and power switch 185 may turn off. At 57, VOUT1 may start to recover due to the short circuit being disconnected from boost converter 200 by power switch 185.

At t8, reset 125 may send RST signal after the short circuit is cleared, and TG may be slowly pulled down by current source 165, for example providing a lower slew rate for turn on than turn off. At t9, TG may reach a turn-on threshold value, causing power switch 185 to start to turn on and supply current to VOUT2. At the same time, boost inductor 210 current may increase, thereby supplying more current to VOUT1. Because the short circuit condition has been removed, VOUT2 may be pulled up. At t10, VOUT2 may be back to regulated voltage. Boost converter 200 and output protection circuit 100A may continue normal operation.

In the above example, operation is shown when RST is sent before a short circuit is cleared (t4-t7) and after a short circuit is cleared (t8-t10) for demonstration purposes. However, at least some embodiments may be configured so that reset 125 does not send RST signal until after any faults in load 300 are corrected, thereby ensuring a complete restart as in t8-t10 (e.g., omitting t4-t7 in an operational sequence).

To summarize, operation of output protection circuit 100B as shown in FIG. 5 may be as follows. A first input terminal of comparator 110 may receive a source input signal (VIN), and a second input terminal of comparator 110 may receive an output signal (VOUT1) from boost converter 200, where boost converter 200 may be configured to generate the VOUT1 from VIN such that during normal operation, VOUT1 > VIN. Comparator 110 output terminal may output a signal indicating the voltage of the output signal (VOUT1) is less than or equal to the voltage of the source input signal (VIN). A control circuit (e.g., some or all elements of protection control network) including an input terminal coupled to the output terminal of comparator 110 and an output terminal coupled to power switch 185 may open power switch 185 in response to receiving the signal indicating the condition. Opening power switch 185 may decouple load 300 from the output signal (VOUT1), thereby preventing current overshoot due to a fault in load 300. Power switch 185 may remain open until output protection circuit 100B receives a reset command.

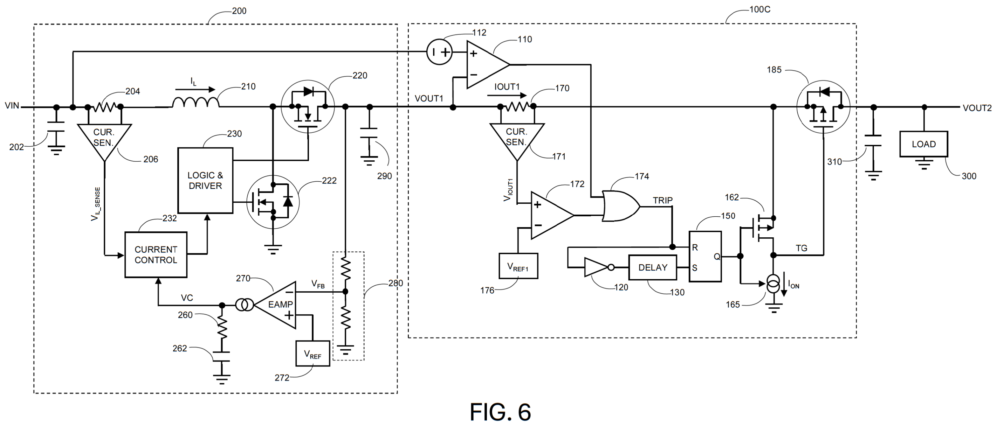

FIG. 6 shows an example circuit diagram of boost converter 200 with output protection circuit 100C including current sensing circuitry according to some embodiments of the disclosure. In some embodiments, output protection circuit 100C can use voltage difference sensing (e.g., output of comparator 110) and/or current sensing to produce a TRIP signal triggering opening of power switch 185. In FIG. 6, output protection circuit 100C is configured to perform hiccup recovery using similar components as output protection circuit 100A, but in other embodiments, inverter 120 and delay 130 may be replaced by reset 125 (not shown) similar to output protection circuit 100B and may perform recovery on reset.

Current sensing circuitry of output protection circuit 100C may include current sensing resistor 170 and current sense buffer 171, which may be configured to sense the current flowing through the protection circuitry (e.g., I_{OUT1}) and output a sense voltage dependent on I_{OUT1} (VI_{OUT1}), as shown. These elements may couple the output of boost converter 200 and/or capacitor 290 with the first terminal of power switch 185, as shown. While not illustrated, alternatively current sensing resistor 170 may be omitted, current sense buffer 171 may have one input terminal coupled to one terminal of power switch 185 and another input terminal coupled to the other terminal of power switch 185, and closed power switch 185 may provide current sensing resistance. Current sensing circuitry of output protection circuit 100C may further include current sense comparator 172, which may be configured to compare VI_{OUT1} with reference voltage 176 (VREF1). Or gate 174 may receive outputs of comparator 110 and current sense comparator 174 as inputs and may output TRIP. Accordingly, if VI_{OUT1} > VREF1, TRIP may go high, triggering opening of power switch 185. This can provide an additional indicator of current overshoot.

Other than the addition of current sensing circuitry, output protection circuit 100C may perform similarly to output protection circuit 100A of FIG. 2. That is, if comparator 110 indicates VOUT1 < (VIN + voltage offset 112), TRIP may go high, triggering opening of power switch 185.

While various embodiments have been described above, it should be understood that they have been presented by way of example and not limitation. It will be apparent to persons skilled in the relevant art(s) that various changes in form and detail can be made therein without departing from the spirit and scope. In fact, after reading the above description, it will be apparent to one skilled in the relevant art(s) how to implement alternative embodiments. For example, other steps may be provided, or steps may be eliminated, from the described flows, and other components may be added to, or removed from, the described systems. Accordingly, other implementations are within the scope of the following claims.

In addition, it should be understood that any figures which highlight the functionality and advantages are presented for example purposes only. The disclosed methodology and system are each sufficiently flexible and configurable such that they may be utilized in ways other than that shown.

Although the term "at least one" may often be used in the specification, claims and drawings, the terms "a", "an", "the", "said", etc. also signify "at least one" or "the at least one" in the specification, claims and drawings.

Finally, it is the applicant's intent that only claims that include the express language "means for" or "step for" be interpreted under 35 U.S.C. 112(f). Claims that do not expressly include the phrase "means for" or "step for" are not to be interpreted under 35 U.S.C. 112(f).

### ASPECTS OF THE DISCLOSURE

Non-limiting aspects of the disclosure are set out in the following numbered clauses:
1. A circuit comprising:
   a boost converter including an input configured to couple to a source input, boost circuitry configured to generate an output power with a higher voltage than a voltage of the source input, an output configured to deliver the output power, at least one capacitor coupled between the boost output and ground, and a feedback and control circuit configured to sense an output voltage of the output power and regulate the output voltage to a predefined level;
   a power disconnect switch including a first terminal arranged to receive the output power and a second terminal configured to couple to a load;
   a comparator including a first input terminal configured to couple to the source input, a second input terminal coupled to the output, and a first output terminal configured to output a condition signal indicating a condition of the output voltage being less than or equal to the voltage of the source input; and
   a control circuit including an input terminal coupled to the first output terminal of the comparator and a second output terminal coupled to the power disconnect switch, the control circuit being configured to open the power disconnect switch in response to receiving the condition signal indicating the condition.
2. The circuit of clause 1, wherein the control circuit is configured to close the power disconnect switch in response to the output voltage becoming higher than the input voltage by a predefined amount.
3. The circuit of any preceding clause, wherein the power disconnect switch is configured to close at a lower slew rate than a slew rate at which the power disconnect switch is configured to open.
4. The circuit of any preceding clause, wherein the control circuit further includes logic configured to close the power disconnect switch after a delay.
5. The circuit of any preceding clause, wherein the control circuit further includes logic configured to shut down the boost converter and keep the disconnect switch open until after a reset.
6. The circuit of any preceding clause, further comprising at least one voltage offset added to at least one of the first input terminal of the comparator and the second input terminal of the comparator, wherein the condition indicates the output voltage is less than or equal to the voltage of the source input plus the offset.
7. The circuit of any preceding clause, further comprising:
   a current sensing element coupling the output of the boost converter with the first terminal of the power disconnect switch; and
   a second comparator including a first input terminal configured to couple to an output of the current sensing element, a second input terminal coupled to a reference signal indicating a threshold, and an output terminal configured to output a second signal indicating a second condition of the current being greater than or equal to the threshold;
   wherein the control circuit is further configured to open the power disconnect switch in response to receiving the second signal indicating the second condition.
8. The circuit of any preceding clause, further comprising:
   a current sensing element coupled to the second terminal of the power disconnect switch;
   a second comparator including a first input terminal configured to couple to an output of the current sensing element, a second input terminal coupled to a reference signal indicating a threshold, and an output terminal configured to output a second signal indicating a second condition of the current being greater than or equal to the threshold;
   wherein the control circuit is further configured to open the power disconnect switch in response to receiving the second signal indicating the second condition.
9. The circuit of any preceding clause, further comprising a second comparator including a first input terminal configured to couple to the first terminal of the power disconnect switch, a second input terminal coupled to the second terminal of the power disconnect switch, and an output terminal configured to output a second signal indicating a second condition of the current being greater than or equal to the threshold, wherein the control circuit is further configured to open the power disconnect switch in response to receiving the second signal indicating the second condition.
10. The circuit of any preceding clause, wherein the boost converter further includes a valley current control circuit configured to reduce a switching frequency in response to an inductor current of the boost converter exceeding a predefined threshold.
11. A circuit comprising:
   a power disconnect switch including a first terminal configured to couple to a boost converter output and a second terminal configured to couple to a load;
   a comparator including a first input terminal configured to couple to a source input, a second input terminal configured to couple to the boost converter output, and a first output terminal configured to output a signal indicating a condition of the boost converter output being less than or equal to the source input; and
   a control circuit including an input terminal coupled to the first output terminal of the comparator and a second output terminal coupled to the power disconnect switch, the control circuit being configured to open the power disconnect switch in response to receiving the signal indicating the condition.
12. The circuit of clause 11, wherein the control circuit is configured to close the power disconnect switch in response to the output voltage becoming higher than the input voltage by a predefined amount.
13. The circuit of clause 11 or clause 12, wherein the power disconnect switch is configured to close at a lower slew rate than a slew rate at which the power disconnect switch is configured to open.
14. The circuit of any of clauses 11 to 13, wherein the control circuit further includes logic configured to close the power disconnect switch after a delay.
15. The circuit of any of clauses 11 to 14, wherein the control circuit further includes logic configured to shut down the boost converter and keep the disconnect switch open until after a reset.
16. The circuit of any of clauses 11 to 15, further comprising at least one voltage offset added to at least one of the first input terminal of the comparator and the second input terminal of the comparator, wherein the condition indicates the output voltage is less than or equal to the voltage of the source input plus the offset.
17. The circuit of any of clauses 11 to 16, further comprising:
   a current sensing element configured to couple the boost converter output with the first terminal of the power disconnect switch; and
   a second comparator including a first input terminal configured to couple to an output of the current sensing element, a second input terminal coupled to a reference signal indicating a threshold, and an output terminal configured to output a second signal indicating a second condition of the current being greater than or equal to the threshold;
   wherein the control circuit is further configured to open the power disconnect switch in response to receiving the second signal indicating the second condition.
18. The circuit of any of clauses 11 to 17, further comprising:
   a current sensing element coupling the second terminal of the power disconnect switch with the load;
   a second comparator including a first input terminal configured to couple to an output of the current sensing element, a second input terminal coupled to a reference signal indicating a threshold, and an output terminal configured to output a second signal indicating a second condition of the current being greater than or equal to the threshold;
   wherein the control circuit is further configured to open the power disconnect switch in response to receiving the second signal indicating the second condition.
19. A method comprising:
   receiving, at a first input terminal of a comparator, a source input signal;
   receiving, at a second input terminal of the comparator, an output signal from a boost converter configured to generate the output signal from the source input signal, wherein during normal operation the boost converter is configured to generate the output signal to have a higher voltage than a voltage of the source input signal;
   outputting, by a first output terminal of the comparator, a signal indicating the voltage of the output signal is less than or equal to the voltage of the source input signal; and
   opening, by a control circuit including an input terminal coupled to the output terminal of the comparator and a second output terminal coupled to a power disconnect switch, the power disconnect switch in response to receiving the signal indicating the condition, thereby decoupling a load from the output signal.

The method of clause 19, further comprising closing the power disconnect switch after a delay or a reset.

## Claims

1. A circuit comprising:
a boost converter including an input configured to couple to a source input, boost circuitry configured to generate an output power with a higher voltage than a voltage of the source input, an output configured to deliver the output power, at least one capacitor coupled between the boost output and ground, and a feedback and control circuit configured to sense an output voltage of the output power and regulate the output voltage to a predefined level;
a power disconnect switch including a first terminal arranged to receive the output power and a second terminal configured to couple to a load;
a comparator including a first input terminal configured to couple to the source input, a second input terminal coupled to the output, and a first output terminal configured to output a condition signal indicating a condition of the output voltage being less than or equal to the voltage of the source input; and
a control circuit including an input terminal coupled to the first output terminal of the comparator and a second output terminal coupled to the power disconnect switch, the control circuit being configured to open the power disconnect switch in response to receiving the condition signal indicating the condition.

2. The circuit of claim 1, wherein the control circuit is configured to close the power disconnect switch in response to the output voltage becoming higher than the input voltage by a predefined amount.

3. The circuit of any preceding claim, wherein the power disconnect switch is configured to close at a lower slew rate than a slew rate at which the power disconnect switch is configured to open.

4. The circuit of any preceding claim, wherein the control circuit further includes logic configured to close the power disconnect switch after a delay.

5. The circuit of any preceding claim, wherein the control circuit further includes logic configured to shut down the boost converter and keep the disconnect switch open until after a reset.

6. The circuit of any preceding claim, further comprising at least one voltage offset added to at least one of the first input terminal of the comparator and the second input terminal of the comparator, wherein the condition indicates the output voltage is less than or equal to the voltage of the source input plus the offset.

7. The circuit of any preceding claim, further comprising:
a current sensing element coupling the output of the boost converter with the first terminal of the power disconnect switch; and
a second comparator including a first input terminal configured to couple to an output of the current sensing element, a second input terminal coupled to a reference signal indicating a threshold, and an output terminal configured to output a second signal indicating a second condition of the current being greater than or equal to the threshold;
wherein the control circuit is further configured to open the power disconnect switch in response to receiving the second signal indicating the second condition.

8. The circuit of any of claims 1 to 6, further comprising:
a current sensing element coupled to the second terminal of the power disconnect switch;
a second comparator including a first input terminal configured to couple to an output of the current sensing element, a second input terminal coupled to a reference signal indicating a threshold, and an output terminal configured to output a second signal indicating a second condition of the current being greater than or equal to the threshold;
wherein the control circuit is further configured to open the power disconnect switch in response to receiving the second signal indicating the second condition.

9. The circuit of any of claims 1 to 6, further comprising a second comparator including a first input terminal configured to couple to the first terminal of the power disconnect switch, a second input terminal coupled to the second terminal of the power disconnect switch, and an output terminal configured to output a second signal indicating a second condition of the current being greater than or equal to the threshold, wherein the control circuit is further configured to open the power disconnect switch in response to receiving the second signal indicating the second condition.

10. The circuit of any preceding claim, wherein the boost converter further includes a valley current control circuit configured to reduce a switching frequency in response to an inductor current of the boost converter exceeding a predefined threshold.

11. A circuit comprising:
a power disconnect switch including a first terminal configured to couple to a boost converter output and a second terminal configured to couple to a load;
a comparator including a first input terminal configured to couple to a source input, a second input terminal configured to couple to the boost converter output, and a first output terminal configured to output a signal indicating a condition of the boost converter output being less than or equal to the source input; and
a control circuit including an input terminal coupled to the first output terminal of the comparator and a second output terminal coupled to the power disconnect switch, the control circuit being configured to open the power disconnect switch in response to receiving the signal indicating the condition.

12. The circuit of claim 11, wherein any one or more of the following applies:
(a) the control circuit is configured to close the power disconnect switch in response to the output voltage becoming higher than the input voltage by a predefined amount;
(b) the power disconnect switch is configured to close at a lower slew rate than a slew rate at which the power disconnect switch is configured to open;
(c) the control circuit further includes logic configured to close the power disconnect switch after a delay;
(d) the control circuit further includes logic configured to shut down the boost converter and keep the disconnect switch open until after a reset;
(e) the circuit further comprises at least one voltage offset added to at least one of the first input terminal of the comparator and the second input terminal of the comparator, wherein the condition indicates the output voltage is less than or equal to the voltage of the source input plus the offset.

13. The circuit of claim 11 or claim 12, further comprising:
a current sensing element configured to couple the boost converter output with the first terminal of the power disconnect switch; and
a second comparator including a first input terminal configured to couple to an output of the current sensing element, a second input terminal coupled to a reference signal indicating a threshold, and an output terminal configured to output a second signal indicating a second condition of the current being greater than or equal to the threshold;
wherein the control circuit is further configured to open the power disconnect switch in response to receiving the second signal indicating the second condition,
or further comprising,
a current sensing element coupling the second terminal of the power disconnect switch with the load;
a second comparator including a first input terminal configured to couple to an output of the current sensing element, a second input terminal coupled to a reference signal indicating a threshold, and an output terminal configured to output a second signal indicating a second condition of the current being greater than or equal to the threshold;
wherein the control circuit is further configured to open the power disconnect switch in response to receiving the second signal indicating the second condition.

14. A method comprising:
receiving, at a first input terminal of a comparator, a source input signal;
receiving, at a second input terminal of the comparator, an output signal from a boost converter configured to generate the output signal from the source input signal, wherein during normal operation the boost converter is configured to generate the output signal to have a higher voltage than a voltage of the source input signal;
outputting, by a first output terminal of the comparator, a signal indicating the voltage of the output signal is less than or equal to the voltage of the source input signal; and
opening, by a control circuit including an input terminal coupled to the output terminal of the comparator and a second output terminal coupled to a power disconnect switch, the power disconnect switch in response to receiving the signal indicating the condition, thereby decoupling a load from the output signal.

15. The method of claim 14, further comprising closing the power disconnect switch after a delay or a reset.
